# EUROPEAN PATENT APPLICATION

(11) **EP 4 598 110 A1**
(43) Date of publication of application: **06.08.2025**
(21) Application number: 23870655.0
(22) Date of filing: 22.09.2023
(51) Int. Cl.: H04W 28/02

(54) **DATA PROCESSING METHOD AND APPARATUS, COMMUNICATION DEVICE, AND STORAGE MEDIUM**

(30) Priority: 30.09.2022 CN 202211216114
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Yongjing, Beijing 100053 (CN); WANG, Dan, Beijing 100053 (CN); SUN, Tao, Beijing 100053 (CN); LU, Lu, Beijing 100053 (CN)
(74) Representative: Maiwald GmbH
(86) International application number: PCT/CN2023/120867
(87) International publication number: WO 2024/067424

(57) **Abstract**

Disclosed in embodiments of the present invention are a data processing method and apparatus, a communication device, and a storage medium. The method comprises: a first function receives a protocol data unit (PDU) in a first PDU set within a delay budget of the first PDU set.

## Description

### CROSS-REFERENCE TO RELATED APPLICATIONS

This disclosure is based on and claims priority to Chinese patent application NO.202211216114.0, filed on September 30, 2022, the entire contents of which are incorporated herein by reference.

### TECHNICAL FIELD

The disclosure relates to the field of communication technology, and in particular to a method and an apparatus for processing data, a communication device, and a storage medium.

### BACKGROUND

To solve a problem of recognizing extended reality (XR) packets in the 5G network, a concept of a protocol data unit (PDU) set is introduced. A data flow may be divided into a plurality of PDU sets, and each PDU set includes a plurality of PDUs. At present, a consistency processing method is applied to the PDU sets, i.e., if a packet in a PDU set is lost, the entire PDU set should be discarded.

The consistency processing method is irrational in some aspects. First, based on definition of the PDU set and characteristics of audio and video applications, when some PDUs are lost, an application layer may still be capable of recovering all or part of information units. For example, if a B-frame or a P-frame is lost in video transmission, the application layer may still reconstruct a video picture by analyzing I-frame information. In addition, the consistency processing method also has a problem of resource waste. When the whole PDU set is discarded due to the loss of a certain PDU, the PDUs that have been successfully transmitted within the PDU set are also discarded at the same time, which is also a resource waste. Thus, there is no effective solution on how the network better processes the PDU set.

### SUMMARY

Embodiments of the disclosure provide a method and an apparatus for processing data, a communication device, and a storage medium.

The technical solution of the disclosure embodiments is implemented in the following.

According to a first aspect, embodiments of the disclosure provide a method for processing data. The method includes: receiving, by a first function, a PDU of a first PDU set within a first PDU set delay budget.

In some optional embodiments of the disclosure, the PDU includes a data burst and/or a data packet.

In some optional embodiments of the disclosure, the method further includes: determining, by the first function, that the first PDU set is successfully transmitted based on all received PDUs of the first PDU set within the first PDU set delay budget and/or a received PDU carrying an end marker.

In some optional embodiments of the disclosure, the method further includes: determining, by the first function, that the first PDU set is not successfully transmitted based on at least one of the received PDU of the first PDU set within the first PDU set delay budget, a first value, a second value, or a received PDU carrying an end marker.

In some optional embodiments of the disclosure, determining, by the first function, that the first PDU set is not successfully transmitted based on at least one of the received PDU of the first PDU set within the first PDU set delay budget, the first value, the second value, or the received PDU carrying the end marker includes one of the following cases: in the case that a number of lost PDUs of the first PDU set within the first PDU set delay budget is greater than the first value and/or a PDU carrying the end marker is not received, determining, by the first function, that the first PDU set is not successfully transmitted; or in the case that a number of received PDUs of the first PDU set within the first PDU set delay budget is less than the second value and/or the PDU carrying the end marker is not received, determining, by the first function, that the first PDU set is not successfully transmitted.

In some optional embodiments of the disclosure, the method further includes: after determining, by the first function, that the first PDU set is not successfully transmitted, performing one or more of the following: discarding, by the first function, the first PDU set; discarding, by the first function, other PDU sets having a dependency on the first PDU set; or calculating, by the first function, a PDU set error rate (PSER) based on the first PDU set.

In some optional embodiments of the disclosure, the first value is a maximum PDU set loss rate/number and/or the second value is a PDU set content ratio.

In some optional embodiments of the disclosure, the first function is a radio access network (RAN) and/or a user plane function (UPF).

According to a second aspect, embodiments of the disclosure provide a method for processing data. The method includes: adding, by a second function, an end marker to a last one or more PDUs of a PDU set.

In some optional embodiments of the disclosure, the second function is one of: a user plane function (UPF), a session management function (SMF), a radio access network (RAN), a network exposure function (NEF), an application function (AF), an access and mobility management function (AMF), a network data analytics function (NWDAF), a unified data management (UDM), or a network repository function (NRF).

According to a third aspect, embodiments of the disclosure provide a method for processing data. The method includes: receiving, by a first function, first information from an SMF.

In some optional embodiments of the disclosure, the first information is descriptive information of all PDU sets for a flow where the PDU set is located.

In some optional embodiments of the disclosure, the first information includes at least one of: a PDU set size, a PDU set identifier (ID), a number of PDUs of the PDU set, a maximum PDU set loss rate/number, a PDU set delay budget, a PDU set content ratio, an N3 jitter, an N9 jitter, or a jitter/jitter range.

In some optional embodiments of the disclosure, for PDU sets with different PDU set IDs, at least one of the PDU set size, the number of PDUs, the maximum PDU set loss rate/number, the PDU set delay budget, the PDU set content ratio, the N3 jitter, the N9 jitter, or the jitter/jitter range of the PDU set corresponding to the first information is different.

In some optional embodiments of the disclosure, the method further includes: receiving, by the first function, the delay budget of one or more PDU sets; and in the case that the first function receives delay budgets of a plurality of PDU sets, selecting, by the first function, a different PDU set delay budget based on the PDU set ID and/or PDU packet information of the PDU set.

In some optional embodiments of the disclosure, the method further includes: in the case that the first function receives the PDU set ID, performing an integrated handling for all PDUs carrying the PDU set ID as a whole.

In some optional embodiments of the disclosure, all PDUs carrying a same PDU set ID have a uniform priority.

In some optional embodiments of the disclosure, the first function is an RAN and/or a UPF.

According to a fourth aspect, embodiments of the disclosure provide a method for processing data. The method includes: receiving, by an SMF, second information from a PCF, in which the second information is generated based on third information related to a PDU set; and the third information is from an AF.

In some optional embodiments of the disclosure, the method further includes: generating, by the SMF, first information based on the second information, and sending the first information to a first function.

In some optional embodiments of the disclosure, the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set quality of service (QoS) parameter, a burst periodicity, PDU set header information, PDU set dependency information, a PDU set importance, or a PDU set QoS requirement.

In some optional embodiments of the disclosure, the second information further includes policy information.

In some optional embodiments of the disclosure, the first function is an RAN and/or a UPF.

In a fifth aspect, embodiments of the disclosure provide a method for processing data. The method includes:
sending, by an AF, third information to a PCF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

According to a sixth aspect, embodiments of the disclosure provide a method for processing data. The method includes:
receiving, by a PCF, third information from an AF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement; and
sending, by the PCF, second information to an SMF.

In some optional embodiments of the disclosure, the method further includes: generating, by the PCF, the second information based on the third information; and/or, the second information further including policy information.

According to a seventh aspect, embodiments of the disclosure provide a method for processing data. The method includes:
receiving, by an AF, a link maximum transmission unit (MTU) value/number/size from a network function (NF); and
performing, by the AF, a first processing based on the link MTU value/number/size.

In some optional embodiments of the disclosure, the first processing includes fragmentation of a data packet, and a size of a fragmented data packet does not exceed the link MTU value/number/size.

In some optional embodiments of the disclosure, the NF includes one of: an NEF, an UPF, an NWDAF, a PCF, a UDM, a UDR, an SMF, or an AMF.

According to an eighth aspect, embodiments of the disclosure provide a method for processing data. The method includes:
providing, by an AF, fourth information of a PDU set group to an NF, in which the fourth information includes: an indication of PDUs belonging to a PDU set, and/or, an indication of PDUs belonging to a PDU set group.

In some optional embodiments of the disclosure, the PDU set is a video slice and/or a frame.

In some optional embodiments of the disclosure, in the case that the PDU set is the video slice, the PDU set group is the frame.

In some optional embodiments of the disclosure, in the case that the PDU set is the frame, the PDU set group is a group of pictures (GOP).

In some optional embodiments of the disclosure, the NF includes one of: an NEF, a UPF, an NWDAF, a PCF, a UDM, a UDR, an SMF, an AMF, or an AF.

According to a ninth aspect, embodiments of the disclosure provide a method for processing data. The method includes:
adding, by an NF, a PDU set group ID to a PDU set and sending the PDU set group ID to a RAN.

In some optional embodiments of the disclosure, the NF includes one of: an NEF, a UPF, an NWDAF, a PCF, a UDM, a UDR, an SMF, an AMF, or an AF.

According to a tenth aspect, embodiments of the disclosure provide a method for processing data. The method includes:
receiving, by an RAN, a PDU set group ID from an NF.

In some optional embodiments of the disclosure, the NF includes one of: an NEF, a UPF, an NWDAF, a PCF, a UDM, a UDR, an SMF, an AMF, or an AF.

In some optional embodiments of the disclosure, the method further includes: in the case that a most important PDU set in a PDU set group received by the RAN is lost or discarded, discarding, by the RAN, other PDU sets in the PDU set group.

According to an eleventh aspect, embodiments of the disclosure provide a method for processing data. The method includes: selecting, by a UE, to access a first function with a first characteristic based on fifth information and/or a data network name (DNN).

In some optional embodiments of the disclosure, the fifth information includes NSSAI and/or S-NSSAI.

In some optional embodiments of the disclosure, the first characteristic is that the first function performs a PDU set integrated packet handling.

In some optional embodiments of the disclosure, a correspondence between the fifth information and/or the DNN and the first characteristic is in user subscription information of the UE.

In some optional embodiments of the disclosure, the first function is an RAN and/or a UPF.

According to a twelfth aspect, embodiments of the disclosure provide a method for processing data. The method includes: receiving, by a first function, an N3 transmission jitter and/or an N9 transmission jitter from a second function, and/or receiving an N6 transmission jitter from an AF.

In some optional embodiments of the disclosure, the first function is an RAN and/or a UPF.

In some optional embodiments of the disclosure, the second function is one of: a PCF, an SMF, an AMF, a UPF, or an NWDAF.

According to a thirteenth aspect, embodiments of the disclosure provide an apparatus for processing data. The apparatus is applied to a first function. The apparatus includes: a first communication unit, configured to receive a PDU of a first PDU set within a first PDU set delay budget.

According to a fourteenth aspect, embodiments of the disclosure provide an apparatus for processing data. The apparatus is applied to a second function. The apparatus includes: a second processing unit, configured to add an end marker to a last one or more PDUs of a PDU set.

According to a fifteenth aspect, embodiments of the disclosure provide an apparatus for processing data. The apparatus is applied to a first function. The apparatus includes: a second communication unit, configured to receive first information from an SMF.

According to a sixteenth aspect, embodiments of the disclosure provide an apparatus for processing data. The apparatus is applied to an SMF. The apparatus includes: a third communication unit, configured to receive second information from a PCF, in which the second information is generated based on third information related to a PDU set; and the third information is from an AF.

According to a seventeenth aspect, embodiments of the disclosure provide an apparatus for processing data. The apparatus is applied to an AF. The apparatus includes: a fourth communication unit, configured to send third information to a PCF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

According to an eighteenth aspect, embodiments of the disclosure provide an apparatus for processing data. The apparatus is applied to a PCF. The apparatus includes: a fifth communication unit, configured to receive third information from an AF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement; and send second information to an SMF.

According to a nineteenth aspect, embodiments of the disclosure provide an apparatus for processing data. The apparatus is applied to an AF. The apparatus includes:
a sixth communication unit, configured to receive a link MTU value/number/size from
an NF; and
a sixth processing unit, configured to perform a first processing based on the link MTU value/number/size.

According to a twentieth aspect, embodiments of the disclosure provide an apparatus for processing data. The apparatus is applied to an AF. The apparatus includes: a seventh communication unit, configured to provide fourth information of a PDU set group for an NF, in which the fourth information includes: an indication of PDUs belonging to a PDU set, and/or, an indication of PDUs belonging to a PDU set group.

According to a twenty-first aspect, embodiments of the disclosure provide an apparatus for processing data. The apparatus is applied to an NF. The apparatus includes: a seventh processing unit and an eighth communication unit, in which
the seventh processing unit is configured to add a PDU set group ID to a PDU set; and
the eighth communication unit is configured to send the PDU set group ID to an RAN.

According to a twenty-second aspect, embodiments of the disclosure provide an apparatus for processing data. The apparatus is applied to an RAN. The apparatus includes: a ninth communication unit, configured to receive a PDU set group ID from an NF.

According to a twenty-third aspect, embodiments of the disclosure provide an apparatus for processing data. The apparatus is applied to a UE. The apparatus includes: a ninth processing unit, configured to select to access a first function with a first characteristic based on fifth information and/or a DNN.

According to a twenty-fourth aspect, embodiments of the disclosure provide an apparatus for processing data. The apparatus is applied to a first function. The apparatus includes: a tenth communication unit, configured to receive an N3 transmission jitter and/or an N9 transmission jitter from a second function, and/or receive an N6 transmission jitter from an AF.

According to a twenty-fifth aspect, embodiments of the disclosure provide a computer-readable storage medium. The computer-readable storage medium having stored a computer program that, when executed by a processor, steps of the method of any one of the first aspect to the twelfth aspect of the disclosure are implemented.

According to a twenty-sixth aspect, embodiments of the disclosure provide a communication device. The communication device includes: a processor and a memory storing a computer program executable by the processor, in which, when the computer program is executed by the processor, steps of the method of any one of the first aspect to the twelfth aspect of the disclosure are implemented.

Embodiments of the disclosure provide a method and an apparatus for processing data, a communication device, and a storage medium. The method includes, in one aspect, a first function receives a PDU of a first PDU set within a first PDU set delay budget. In another aspect, the first function receives first information from an SMF. The first information is descriptive information of all PDU sets for a flow where the PDU set is located. This facilitates the first function may subsequently determine whether the PDU set is successfully transmitted based on the first information and the received PDU of the first PDU set within the first PDU set delay budget, and thus determine a subsequent processing of the PDU set. The technical solution of the embodiments of the disclosure maximally ensures the transmission of the PDU set, which not only improves the resource utilization rate of the network, but also improves the quality of service for the user and reduces the lag phenomenon for the user when using the service compared to directly discarding the entire PDU set.

### BRIEF DESCRIPTION OF THE DRAWINGS

FIG. 1 is a first flow chart illustrating a method for processing data according to an embodiment of the disclosure.
FIG. 2 is a second flow chart illustrating a method for processing data according to the embodiments of the disclosure.
FIG. 3 is a third flow chart illustrating a method for processing data according to an embodiment of the disclosure.
FIG. 4 is a fourth flow chart illustrating a method for processing data according to an embodiment of the disclosure.
FIG. 5 is a fifth flow chart illustrating a method for processing data according to an embodiment of the disclosure.
FIG. 6 is a sixth flow chart illustrating a method for processing data according to an embodiment of the disclosure.
FIG. 7 is a seventh flow chart illustrating a method for processing data according to an embodiment of the disclosure.
FIG. 8 is an eighth flow chart illustrating a method for processing data according to an embodiment of the disclosure.
FIG. 9 is a ninth flow chart illustrating a method for processing data according to an embodiment of the disclosure.
FIG. 10 is a tenth flow chart illustrating a method for processing data according to an embodiment of the disclosure.
FIG. 11 is an eleventh flow chart illustrating a method for processing data according to an embodiment of the disclosure.
FIG. 12 is a twelfth flow chart illustrating a method for processing data according to an embodiment of the disclosure.
FIG. 13 is a schematic diagram illustrating an interaction of a method for processing data according to an embodiment of the disclosure.
FIG. 14 is a first block diagram illustrating a structure of an apparatus for processing data according to an embodiment of the disclosure.
FIG. 15 is a second block diagram illustrating a structure of an apparatus for processing data according to an embodiment of the disclosure.
FIG. 16 is a third block diagram illustrating a structure of an apparatus for processing data according to an embodiment of the disclosure.
FIG. 17 is a fourth block diagram illustrating a structure of an apparatus for processing data according to an embodiment of the disclosure.
FIG. 18 is a fifth block diagram illustrating a structure of an apparatus for processing data according to an embodiment of the disclosure.
FIG. 19 is a sixth block diagram illustrating a structure of an apparatus for processing data according to an embodiment of the disclosure.
FIG. 20 is a seventh block diagram illustrating a structure of an apparatus for processing data according to an embodiment of the disclosure.
FIG. 21 is an eighth block diagram illustrating a structure of an apparatus for processing data according to an embodiment of the disclosure.
FIG. 22 is a ninth block diagram illustrating a structure of an apparatus for processing data according to an embodiment of the disclosure.
FIG. 23 is a tenth block diagram illustrating a structure of an apparatus for processing data according to an embodiment of the disclosure.
FIG. 24 is an eleventh block diagram illustrating a structure of an apparatus for processing data according to an embodiment of the disclosure.
FIG. 25 is a twelfth block diagram illustrating a structure of an apparatus for processing data according to an embodiment of the disclosure.
FIG. 26 is a block diagram illustrating a hardware structure of a communication device according to an embodiment of the disclosure.

### DETAILED DESCRIPTION

The disclosure is described in further detail below with reference to the accompanying drawings and specific embodiments.

Technical solutions in embodiments of the disclosure are applicable to various communication systems. For example, a global system of mobile communication (GSM) system, a long term evolution (LTE) system, or a 5th generation (5G) system, and the likes. Optionally, the 5G system or a 5G network may also be referred to as a new radio (NR) system or an NR network.

For example, a communication system applied in the embodiments of the disclosure may include a network device and a terminal device (which may also be referred to as a terminal, a communication terminal, and the like). The network device may be a device that communicates with the terminal. The network device may provide communication coverage within a certain area and may communicate with terminals located within the area. Optionally, the network device may be a base station in each communication system. For example, an evolved node B (eNB) in the LTE system, or for example, a base station (gNB) in the 5G system or the NR system.

It should be understood that a device with a communication function in a network/system in an embodiment of the disclosure may be referred to as a communication device. The communication device may include the network device and the terminal with the communication function. The network device and the terminal may be a specific device as described above and will not be described herein. The communication device may also include other devices in the communication system, such as a network controller, a mobile management entity, and other network entities, which are not limited in the disclosure embodiments.

It should be understood that the terms "system" and "network" are often used interchangeably in the disclosure. The term "and/or" in the disclosure is simply a way of describing an association relationship of associated objects, indicating that there may be three types of relationships. For example, A and/or B may mean: A exists alone, A and B exist at the same time, and B exists alone. The character "/" generally indicates that the associated objects before and after are in an "or" relationship.

It should be noted that, the term "first" and "second" are used to distinguish similar objects, and are not necessarily used to describe a specific order or sequence. It should be understood that the data used herein may be interchanged under appropriate circumstances, so that the embodiments of the disclosure described herein can be implemented in an order other than that illustrated or described herein. In addition, the terms "including" and "having", and their variations are intended to cover non-exclusive inclusions. For example, a process, method, system, product, or device that includes a series of steps or units is not limited to those explicitly listed but may also include other steps or units that are inherent to these processes, methods, products, or devices and not explicitly mentioned.

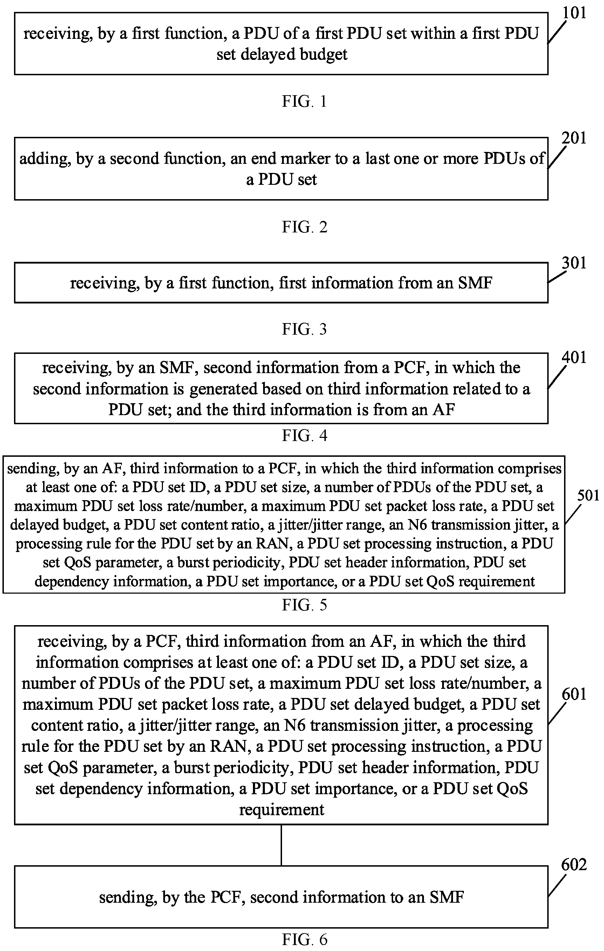

The embodiments of the disclosure provide a method for processing data. FIG. 1 is a first flow chart illustrating a method for processing data according to an embodiment of the disclosure. As shown in FIG. 1, the method includes the following step 101.

At step 101: a first function receives a PDU of a first PDU set within a first PDU set delay budget.

In some optional embodiments, the first function is a radio access network (RAN) and/or a user plane function (UPF). The RAN may also be referred to as a network device, a communication device, an access network device, and etc. For example, the RAN may be a base station in a communication system.

In the embodiment, a PDU set (e.g., a first PDU set) includes one or more PDUs. In the embodiments of the disclosure, all PDUs in the PDU set (e.g., the first PDU set) have a same priority.

In conventional technical solutions, a PDU is usually provided with a corresponding packet delay budget (PDB), which indicates an upper limit of the time that a packet may be delayed between a user equipment (UE) and a UPF. In the disclosure, a PDU set is provided with a corresponding PDU set delay budget, which indicates an upper limit of the time that a PDU set may be delayed between the UE and the UPF. In the embodiment, the first function receives the PDU of the first PDU set within the first PDU set delay budget.

In the embodiment, the first PDU set received by the first function may be a PDU set from an application function (AF). For example, the PDU set is sent from the AF, reach the UPF via other core network elements, and is sent to the RAN from the UPF.

In some optional embodiments, the PDU includes a data burst and/or a data packet. The data packet herein may also be referred to as data or packet for simplicity of description.

In some optional embodiments of the disclosure, the method further includes: determining, by the first function, that the first PDU set is successfully transmitted based on all received PDUs of the first PDU set within the first PDU set delay budget and/or a received PDU carrying an end marker.

In the embodiment, as an example, the end marker is added to one or more last PDUs of a PDU set. The first function may determine that the first PDU set is successfully transmitted when the first function receives a PDU carrying the end marker, after starting to receive PDUs in the first PDU set. As another example, in the case that all PDUs of the first PDU set are received within the first PDU set delay budget, the first function may also determine that the first PDU set is successfully transmitted based on the number of PDUs within the first PDU set. As another example, in the case that all PDUs of the first PDU set are received within the first PDU set delay budget, i.e., the first function receives the PDUs carrying the end marker, the first function may also determine that the first PDU set is successfully transmitted based on the number of PDUs within the first PDU set.

In other optional embodiments of the disclosure, the method further includes: determining, by the first function, that the first PDU set is not successfully transmitted based on at least one of received PDU(s) of the first PDU set within the first PDU set delay budget, a first value, a second value, or a received PDU carrying the end marker.

Optionally, the first value is a maximum PDU set loss rate/number and/or the second value is a PDU set content ratio.

In the embodiment, the first function obtains or determines the first value and/or the second value in advance, in which the first value is the maximum PDU set loss rate/number and the second value is the PDU set content ratio. The first function determines that the first PDU set is not successfully transmitted based on the received PDU(s) of the first PDU set within the first PDU set delay budget and the first value; and/or, determines that the first PDU set is not successfully transmitted based on the received PDU(s) of the first PDU set within the first PDU set delay budget and the second value. Alternatively, the first function may determine that the first PDU set is not successfully transmitted based on the PDU carrying the end marker not being received within the first PDU set delay budget.

In some optional embodiments, determining, by the first function, that the first PDU set is not successfully transmitted based on at least one of the received PDU(s) of the first PDU set within the first PDU set delay budget, the first value, the second value, or the received PDU carrying the end marker includes one of the following cases:
in the case that a number of lost PDUs of the first PDU set within the first PDU set delay budget is greater than the first value and/or the PDU carrying the end marker is not received, determining, by the first function, that the first PDU set is not successfully transmitted; or
in the case that a number of received PDUs of the first PDU set within the first PDU set delay budget is less than the second value and/or the PDU carrying the end marker is not received, determining, by the first function, that the first PDU set is not successfully transmitted.

As an example, the first function may compare the number of received PDUs of the first PDU set within the first PDU set delay budget with the first value, and determine whether the first PDU set is successfully transmitted based on a comparison result. As another example, the first function may compare the number of received PDUs of the first PDU set within the first PDU set delay budget with the second value, and determine whether the first PDU set is successfully transmitted based on a comparison result. As another example, the first function may determine whether the first PDU set is successfully transmitted based on whether the PDU carrying the end marker is received within the first PDU set delay budget. If the PDU carrying the end marker is received, it may be determined that the first PDU set is successfully transmitted. Accordingly, if the PDU carrying the end marker is not received, it may be determined that the first PDU set is not successfully transmitted.

In the embodiment, for each PDU set (e.g., the first PDU set), each PDU within the PDU set carries a PDU set identifier (ID). The first function counts a number of received PDUs corresponding to the first PDU set from receiving a first PDU carrying a first PDU set ID. PDU loss may occur during the process. As an example, the first function determines the number of received PDUs by counting the number of received PDUs of the first PDU set, thus a number of lost PDUs may be determined. The first function further determines a PDU set packet loss rate of the first PDU set by comparing a number of lost PDUs with the first value indicating a maximum loss number, or by comparing the number of lost PDUs with a number of PDUs of the first PDU set, thus determining a loss rate of the PDU of the first PDU set, and thus comparing the loss rate with the first value indicating a maximum loss rate. If the number of lost PDUs is greater than the first value, or the loss rate is greater than the first value, then it may be indicated that the number of lost PDUs is greater, and it is determined that the first PDU set is not successfully transmitted. If the number of lost PDUs is less than or equal to the first value, or the loss rate is less than or equal to the first value, it may indicate that the number of lost PDUs is less, and it may be determined that the first PDU set is successfully transmitted. As another example, the first function determines the number of received PDUs by counting the number of received PDUs of the first PDU set and compares the number of PDUs with the second value. If the number of received PDUs is less than the second value, it is determined that the first PDU set is not successfully transmitted. If the number of received PDUs is greater than or equal to the second value, it may be determined that the first PDU set is successfully transmitted.

In some optional embodiments of the disclosure, the method further includes: after determining, by the first function, that the first PDU set is not successfully transmitted, performing one or more of the following:
discarding, by the first function, the first PDU set;
discarding, by the first function, other PDU sets having a dependency on the first PDU set; or
calculating, by the first function, a PDU set error rate (PSER) based on the first PDU set.

In the embodiment, the PDU may be a video-related data packet. After a video image is compressed, a frame of image or a group of images may be compressed into one or more I-frame, one or more B-frame, and one or more P-frame, in which a I-frame is a key frame, a P-frame indicates a difference between the frame and a previous key frame (or P-frame), and a B-frame is a bi-directional difference frame. All PDUs in the PDU set have the same priority, so that one PDU set may be considered to correspond to the same type of frame. For example, all PDUs in the first PDU set may all be I-frame data, B-frame data or P-frame data. In the case that the first PDU set corresponds to I-frame data, there must be other PDU sets that are corresponding B-frame data and P-frame data, and thus the other PDU sets are PDU sets that have a dependency on the first PDU set.

In the embodiment, the dependency between the PDU sets may be embodied in a PDU set group. For example, the PDU may be a video-related data packet, such as a video slice, and the PDU set may be a frame composed of PDUs, which may be an I-frame, a B-frame or a P-frame. A plurality of PDU sets with dependencies may form a PDU set group, thus obtaining a group of pictures (GOP). The GOP is generally included of IBBPBBP. The B-frames and P-frames in the GOP have a dependency on the I-frame. There is also a dependency between the B-frames and P-frames within the GOP. At this case, all the PDU sets within the PDU set group have a dependency on each other, and a most important PDU set in the PDU set group is the I-frame since other PDU sets, i.e., the other B-frames and P-frames in the GOP group, are all dependent on the I-frame. The I-frame herein is the most important PDU set in the PDU set group as described in the following embodiments of the disclosure (e.g., claim 39), i.e., the first PDU set as described in the embodiments. If the first PDU set is not successfully transmitted or is discarded, the other PDU sets in the PDU set group, i.e., the other PDU sets that have a dependency on the first PDU set, are also discarded.

For example, in the case that the PDU is a packet with a smaller granularity such as a video tile and the PDU set is an I-slice or a B-slice or a P-slice, the PDU set group is a frame, and all PDU sets within the PDU set group are video slices of the frame, and have a dependency on other PDU sets. The I-slice herein is the most important PDU set in the PDU set group as described in the following embodiments of the disclosure (e.g., claim 39), i.e., the first PDU set as described in the embodiments. If the first PDU set is not successfully transmitted or is discarded, the other PDU sets in the PDU set group, i.e., the other PDU sets that have a dependency on the first PDU set, are also discarded.

In the embodiment, the first function calculates the PSER based on the first PDU set, thus presenting a network state.

Embodiments of the disclosure further provide a method for processing data. FIG. 2 is a second flow chart illustrating a method for processing data according to an embodiment of the disclosure. As shown in FIG. 2, the method includes the following step 201.

At step 201: a second function adds an end marker to a last one or more PDUs of a PDU set.

In the embodiment, the second function adds the end marker to the last one or more PDUs of each PDU set during a process of receiving the PDU set and sending the PDU set.

In some optional embodiments of the disclosure, the second function is one of: a UPF, a session management function (SMF), an RAN, a network exposure function (NEF), an AF, an access and mobility management function (AMF), a network data analytics function (NWDAF), a unified data management (UDM), or a network repository function (NRF).

Embodiments of the disclosure further provide a method for processing data. FIG. 3 is a third flow chart illustrating a method for processing data according to an embodiment of the disclosure. As shown in FIG. 3, the method includes the following step 301.

At step 301: a first function receives first information from an SMF.

In some optional embodiments, the first information is descriptive information of all PDU sets for a flow where the PDU set is located, or briefly, the first information is PDU set parameters or PDU set characteristics. That is, the first information includes any information related to the PDU set.

In some optional embodiments, the first function is a RAN and/or a UPF.

In the embodiment, the first function receives the first information from a core network (e.g., an SMF). Optionally, if the first function is an RAN, the RAN may receive the first information from the SMF via an AMF; if the first function is a UPF, the UPF may directly receive the first information from the SMF.

In some optional embodiments, the first information includes at least one of: a PDU set size, a PDU set ID, a number of PDUs of the PDU set, a maximum PDU set loss rate/number, a PDU set delay budget, a PDU set content ratio, an N3 jitter, an N9 jitter, or a jitter/jitter range.

In some optional embodiments, for PDU sets with different PDU set IDs, at least one of the PDU set size, the number of PDUs, the maximum PDU set loss rate/number, the PDU set delay budget, the PDU set content ratio, the N3 jitter, the N9 jitter, or the jitter/jitter range of the PDU set corresponding to the first information is different.

In the embodiment, contents of the first information (other than the PDU set ID) corresponding to different PDU sets may be the same, or may be partially the same and partially different, or may be completely different.

In some optional embodiments of the disclosure, the method further includes: receiving, by the first function, a delay budget of one or more PDU sets; and in the case that the first function receives delay budgets of a plurality of PDU sets, selecting, by the first function, a different PDU set delay budget based on the PDU set ID and/or packet information (e.g., information related to a packet, information included in the packet, or a packet type) of the PDU of the PDU set.

In some optional embodiments of the disclosure, the method further includes: in the case that the first function receives the PDU set ID, performing a unified processing (e.g., PDU set integrated packet handling, or PDU set integrated packet scheduling, or packets in such a PDU set are decoded/handled as a whole) on all PDUs carrying the PDU set ID as a whole.

In the embodiment, the first function may use unified or consistent processing for PDUs carrying the same PDU set ID.

Optionally, all PDUs carrying the same PDU set ID have a uniform priority. Alternatively, the PDUs carrying the same PDU set ID have a same priority.

Embodiments of the disclosure further provide a method for processing data. FIG. 4 is a fourth flow chart illustrating a method for processing data of an embodiment of the disclosure. As shown in FIG. 4, the method includes the following step 401.

At step 401: an SMF receives second information from a PCF, in which the second information is generated based on third information related to a PDU set; and the third information is from an AF.

In some optional embodiments, the third information includes at least one of: a PDU set ID, a PDU set size, a PDU set packet loss rate, a processing rule for the PDU set by an RAN, a PDU set processing instruction, a PDU set QoS parameter, a burst periodicity, PDU set header information, PDU set dependency information, a PDU set importance, or a PDU set QoS requirement.

For example, the PDU set QoS requirement may include a delay requirement for all PDUs in the PDU set, a bandwidth requirement, a packet loss rate requirement for the PDU set, and the like.

In the embodiment, the AF sends the third information to the PCF. The third information is information related to the PDU set, or may also be referred to as PDU set information. The PCF generates the second information based on the third information, and sends the second information to the SMF. The second information may include at least part of contents of the third information.

In some optional embodiments, the second information may include at least one of: the PDU set ID, the PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, the processing rule for the PDU set by the RAN, the PDU set processing instruction, the PDU set QoS parameter, the burst periodicity, the PDU set header information, the PDU set dependency information, the PDU set importance, or the PDU set QoS requirement. That is, the second information may include at least one piece of information in the third information.

In some optional embodiments, the second information further includes policy information. For example, the policy information may be a policy and charging control (PCC) rule. The PCC Rule may be generated by the PCF.

In some optional embodiments of the disclosure, the method includes: generating, by the SMF, first information based on the second information, and sending, by the SMF, the first information to a first function. Optionally, the first information is descriptive information of all PDU sets for a flow where the PDU set is located.

Optionally, the first information includes at least one of: the PDU set size, the PDU set ID, the number of PDUs of the PDU set, the maximum PDU set loss rate/number, the PDU set delay budget, the PDU set content ratio, an N3 jitter, an N9 jitter, or the jitter/jitter range.

In the embodiment, the SMF may generate the first information corresponding to the PDU set based on contents of the second information.

In some optional embodiments, the first information further includes the processing rule for the PDU set.

In the embodiment, the processing rule for the PDU set may include a QoS configuration ( which may be denoted as a QoS profile) at a granularity of the PDU set, i.e., the first function may process all PDUs in each PDU set based on the processing rule (or the QoS profile).

Embodiments of the disclosure further provide a method for processing data. FIG. 5 is a fifth flow chart illustrating a method for processing data according to an embodiment of the disclosure. As shown in FIG. 5, the method includes the following step 501.

At step 501: an AF sends third information to a PCF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

In the embodiment, the AF sends information related to the PDU set (i.e., the third information, which may also be referred to as PDU set information) to the PCF. For example, the AF may send the third information to the PCF via an NEF. For example, the AF sends the third information to the NEF, and after authenticating the AF, the NEF sends the third information to the PCF. The third information sent to the NEF from the AF and the third information sent to the PCF from the NEF may be carried by different messages.

The third message may be used by the PCF to generate policy information.

Embodiments of the disclosure further provide a method for processing data. FIG. 6 is a sixth flow chart illustrating a method for processing data according to an embodiment of the disclosure. As shown in FIG. 6, the method includes the following steps 601 to 602.

At step 601: a PCF receives third information from an AF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

At step 602: the PCF sends second information to an SMF.

In the embodiment, the second information may include at least a part of information in the third information. Optionally, the second information may include at least one of: the PDU set ID, the PDU set size, the number of PDUs of the PDU set, the maximum PDU set loss rate/number, the maximum PDU set packet loss rate, the PDU set delay budget, the PDU set content ratio, the jitter/jitter range, the N6 transmission jitter, the processing rule for the PDU set by an RAN, the PDU set processing instruction, the PDU set QoS parameter, the burst periodicity, the PDU set header information, the PDU set dependency information, the PDU set importance, or the PDU set QoS requirement. That is, the second information may include at least one piece of information in the third information.

In some optional embodiments, the method further includes: generating, by the PCF, the second information based on the third information; and/or, the second information further includes policy information.

Optionally, the PCF may generate the policy information based on the third information. For example, the policy information may be a PCC rule.

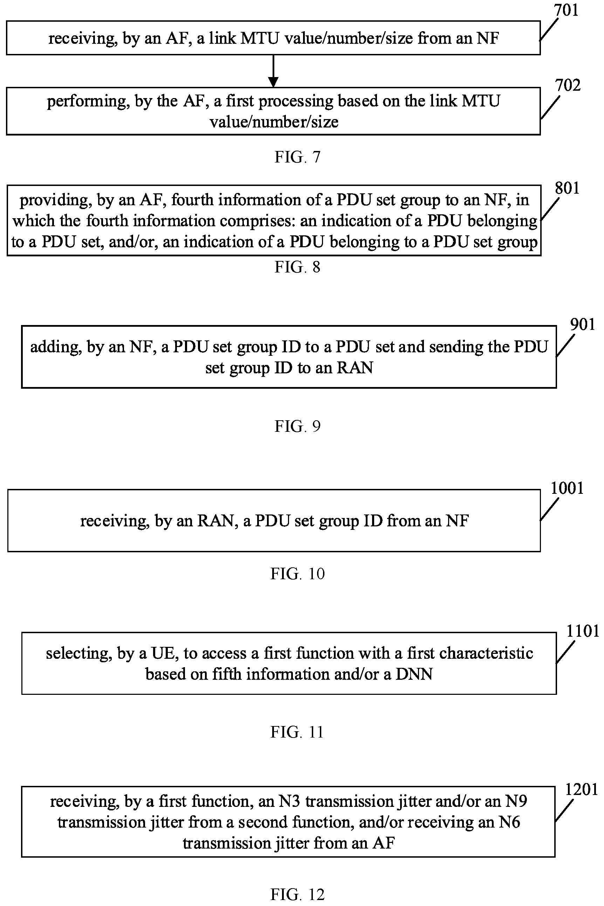

Embodiments of the disclosure further provide a method for processing data. FIG. 7 is a seventh flow chart illustrating a method for processing data of an embodiment of the disclosure. As shown in FIG. 7, the method includes the following steps 701 to 702.

At step 701: an AF receives a link maximum transmission unit (MTU) value/number/size from a network function (NF).

At step 702: the AF performs a first processing based on the link MTU value/number/size.

In the embodiment, the NF may be an NF in a 5G system or an NF in a 5G network. The NF includes one of the following: an NEF, a UPF, an NWDAF, a PCF, a UDM, a UDR, an SMF, or an AMF.

In some optional embodiments, the first processing includes fragmentation of a data packet, and a size of a fragmented data packet does not exceed the link MTU value/number/ size.

In the embodiment, before transmitting the data or a data packet, the AF performs fragmentation on the data or the data packet to be transmitted based on the link MTU value/number/size, so that the size of the data packet does not exceed the link MTU value/number/size. This ensures that fragmentation is no longer performed on the data or the data packet in the mobile network and improves the transmission efficiency, while also affecting the PDU set delay budget and the PDU set packet loss rate. The link MTU value is a maximum byte length of a payload in each packet that can be transmitted, as specified by a network between a UE and the network. However, an application layer does not follow the value for generating the data packet, which is less than a length of a data packet generated by an application. Thus, if the network does not send the link MTU value/number/size to the AF, the AF generates the data packet itself, resulting in that a byte length of the data packet having exceeds the MTU value/number/size. For example, if the link MTU value/number/size is 1424 octets, while a MTU value corresponding to the data packet, i.e., a packet, i.e., a PDU sent by the AF is 1500 octets. The AF sends a PDU set containing 20 data packets (PDUs) and specifies that the PDU set delay budget is 5ms and the PDU set packet loss rate is 10%. Due to the limitation of the link MTU value/number/size, the 20 data packets are split into 40 packets, with sizes of 1424, 76, 1424, 76,... 1424, 76. In this case, the number of PDUs in the PDU set is doubled, so the PDU set transmission delay may exceed the specified PDU set delay budget, and also lead to a larger PDU set packet loss rate. If the AF knows the link MTU size before transmitting the data, the AF may send the data packets based on a length of 1424, and the data packets are not re-fragmented when the data is transmitted to the network, thus eliminating such problems at the source. Thus, by performing the fragmentation on the data or the data packet to be transmitted based on the link MTU value/number/size, the AF may effectively reduce the PDU set delay budget, reduce the case of the first PDU set being unsuccessfully transmitted, which in turn reduces the case of the PDU set being discarded, and reduce the PDU set packet loss rate.

It should be noted that the different embodiments relating to the AF described above may be combined in any combination. For example, after sending the third information to the PCF, the AF performs the first processing based on the link MTU value/number/size. Alternatively, when sending the third information to the PCF, the AF performs the first processing based on the link MTU value/number/size. Alternatively, before sending the third information to the PCF, the AF performs the first processing based on the link MTU value/number/size. The above examples are only intended to reflect combinations of different embodiments relating to the AF and do not limit the order of execution.

Embodiments of the disclosure further provide a method for processing data. FIG. 8 is an eighth flow chart illustrating a method for processing data according to an embodiment of the disclosure. As shown in FIG. 8, the method includes the following step 801.

At step 801: an AF provides fourth information of a PDU set group to an NF, in which the fourth information includes: an indication of PDUs belonging to a PDU set, and/or, an indication of PDUs belonging to a PDU set group.

The fourth information in the embodiment may also be included in the third information of the above embodiments.

In the embodiment, the indication of the PDUs belonging to the PDU set may indicate which PDUs belong to a PDU set. The indication of the PDUs belonging to the PDU set group may be indicate which PDUs belong to a PDU set group.

In the embodiment, the NF may be an NF in a 5G system or an NF in a 5G network. The NF includes one of the following: an NEF, a UPF, an NWDAF, a PCF, a UDM, a UDR, an SMF, an AMF, or an AF.

In some optional embodiments, the PDU set is a video slice and/or a frame. That is, the PDU set includes or corresponds to a video slice and/or a video frame.

In some optional embodiments, in the case that the PDU set is the video slice, the PDU set group is the frame or the video frame.

In some optional embodiments, in the case that the PDU set is the frame or the video frame, the PDU set group is a GOP.

Embodiments of the disclosure further provide a method for processing data. FIG. 9 is a ninth flow chart illustrating a method for processing data according to an embodiment of the disclosure. As shown in FIG. 9, the method includes the following step 901.

At step 901: an NF adds a PDU set group ID to a PDU set and sends the PDU set group ID to an RAN.

In the embodiment, in the case that a most important PDU set in a PDU set group received by the RAN is lost or discarded, the RAN discards other PDU sets in the PDU set group. The most important PDU set herein also refers to the first PDU set described in the previous embodiments. In the case that the first PDU set is not successfully transmitted, the RAN discards other PDU sets of the PDU set group, that is, the other PDU sets that have a dependency on the first PDU set.

In the embodiment, the NF may be an NF in a 5G system or an NF in a 5G network. The NF includes one of the following: an NEF, a UPF, an NWDAF, a PCF, a UDM, a UDR, an SMF, an AMF, or an AF.

Embodiments of the disclosure further provide a method for processing data. FIG. 10 is a tenth flow chart illustrating a method for processing data according to an embodiment of the disclosure. As shown in FIG. 10, the method includes the following step 1001.

At step 1001: an RAN receives a PDU set group ID from an NF.

In the embodiment, the NF may be an NF in a 5G system or an NF in a 5G network. The NF includes one of the following: an NEF, a UPF, an NWDAF, a PCF, a UDM, a UDR, an SMF, an AMF, or an AF.

In some optional embodiments of the disclosure, the method includes: in the case that a most important PDU set in a PDU set group received by the RAN is lost or discarded, discarding, by the RAN, other PDU sets in the PDU set group. The most important PDU set in the PDU set group herein also refers to the first PDU set described in the previous embodiments. In the case that the first PDU set is not successfully transmitted, the RAN discards other PDU sets of the PDU set group, that is, other PDU sets that have a dependency on the first PDU set.

In the embodiment, the PDU may be a video-related data packet. After a video image is compressed, a frame of image or a group of images may be compressed into one or more I-frames, one or more B-frames, and one or more P-frames, in which the I-frame is a key frame, the P-frame indicates a difference between the frame and a previous key frame (or P-frame), and the B-frame is a bi-directional difference frame. A PDU set group may include PDU sets corresponding to the I-frame, the B-frame, and the P-frame corresponding to a frame of image or a group of images. The I-frame may be considered as the most important frame, i.e., a PDU set corresponding to the I-frame may be referred to as a most important PDU set. Alternatively, the most important PDU set may be referred to as a PDU set that other PDU sets depend on. In the embodiment, in the case that a most important PDU set in a PDU set group received by the RAN is lost or discarded, the RAN discards other PDU sets in the PDU set group.

In the embodiment, the dependency between the PDU sets may be embodied in a PDU set group. For example, the PDU may be a video-related data packet, such as a video slice, and the PDU set may be a frame composed of PDUs, which may be an I-frame, a B-frame or a P-frame. A plurality of PDU sets with dependencies may form a PDU set group, thus obtaining a GOP. The GOP is generally included of IBBPBBP (I for I-frame, B for B-frame, P for P-frame). The B-frames and P-frames in the GOP have a dependency on the I-frame. There is also a dependency between the B-frames and P-frames within the GOP. At this point, all the PDU sets within the PDU set group have a dependency on each other, and the most important PDU set in the PDU set group is the I-frame since other PDU sets, i.e., the other B-frames and P-frames in the GOP group, are all dependent on the I-frame. The I-frame herein is the most important PDU set in the PDU set group as described in the following embodiments of the disclosure (e.g., claim 39), i.e., the first PDU set as described in the embodiments. If the first PDU set is not successfully transmitted or is discarded, the other PDU sets in the PDU set group, i.e., the other PDU sets that have a dependency on the first PDU set, are also discarded.

For another example, in the case that the PDU is a packet with a smaller granularity such as a video tile and the PDU set is an I-slice or a B-slice or a P-slice, the PDU set group is a frame, and all PDU sets within the PDU set group are video slices of the frame, and have a dependency on other PDU sets. The I-slice herein is the most important PDU set in the PDU set group as described in the following embodiments of the disclosure (e.g., claim 39), i.e., the first PDU set as described in the embodiments. If the first PDU set is not successfully transmitted or is discarded, the other PDU sets in the PDU set group, i.e., the other PDU sets that have a dependency on the first PDU set, are also discarded.

Embodiments of the disclosure further provide a method for processing data. FIG. 11 is an eleventh flow chart illustrating a method for processing data according to an embodiment of the disclosure. As shown in FIG. 11, the method includes the following step 1101.

At step 1101: a UE selects to access a first function with a first characteristic based on fifth information and/or a DNN.

The first function herein is the first function described in the previous embodiments for receiving a PDU of a first PDU set within a first PDU set delay budget.

In some optional embodiments, the fifth information includes network slice selection assistance information (NSSAI) and/or single network slice selection assistance information (S-NSSAI).

In some optional embodiments, the first characteristic is that the first function performs a PDU set integrated packet handling. The PDU set integrated packet handling refers to, if the first PDU set is not successfully transmitted as described in the previous embodiments, i.e., the first function does not receive all PDUs of the first PDU set, the first function discards the first PDU set. The PDU set integrated packet handling also includes that if the first PDU set is not successfully transmitted, the first function discards the other PDU sets that have a dependency on the first PDU set. That is, in the case that the most important PDU set in the PDU set group is loss or discarded or not successfully transmitted, the other PDU sets in the PDU set group are also discarded.

In some optional embodiments, a correspondence between the fifth information and/or the DNN and the first characteristic is in user subscription information of the UE.

In some optional embodiments, the first function is an RAN and/or a UPF. The first function herein is the first function described in the previous embodiments for receiving a PDU of a first PDU set within a first PDU set delay budget.

Embodiments of the disclosure further provide a method for processing data. FIG. 12 is a twelfth flow chart illustrating a method for processing data according to an embodiment of the disclosure. As shown in FIG. 12, the method includes the following step 1201.

At step 1201: the first function receives an N3 transmission jitter and/or an N9 transmission jitter from a second function, and/or receiving an N6 transmission jitter from an AF.

In some optional embodiments, the first function is an RAN and/or a UPF. The first function herein is the first function described in the previous embodiments for receiving a PDU of a first PDU set within a first PDU set delay budget. The N3 transmission jitter and/or the N9 transmission jitter may be included in the first information. The N6 transmission jitter may be included in the third information.

In some optional embodiments, the second function is one of: a PCF, an SMF, an AMF, a UPF, or an NWDAF.

The N3 transmission jitter indicates a transmission jitter of an N3 interface, in which the N3 interface is an interface between the RAN and the UPF. The N9 transmission jitter indicates a transmission jitter of an N9 interface, in which the N9 interface is an interface between two UPFs.

The method for processing data in embodiments of the disclosure is described in detail in connection with specific examples.

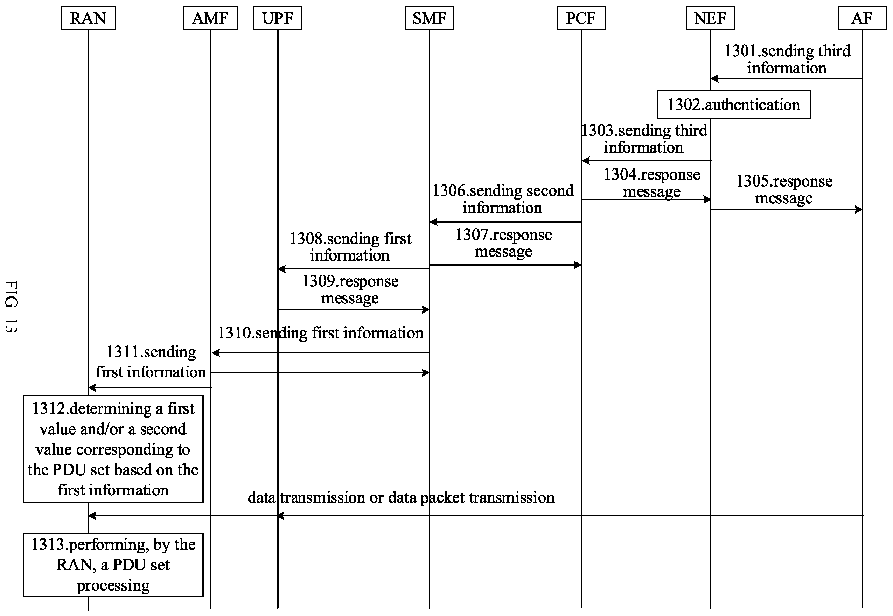

FIG. 13 is a schematic diagram illustrating an interaction of a method for processing data according to an embodiment of the disclosure. As shown in FIG. 13, the method includes the following steps from 1301 to 1313.

At step 1301 to step 1305: an AF sends third information to a PCF via an NEF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement. The PDU set size may represent, for example, a number of PDUs or a number of data packets included in the PDU set.

In particular, the AF sends a request (Nnef_AfsessionWithQoS_Create request) to the NEF, and sends the third information to the NEF via the request. The NEF performs an authentication on the AF, and after the authentication is passed, the NEF sends a request (Npcf_PolicyAuthorization_Create request) to the PCF, and sends the third information to the PCF via the request. Further, after receiving the third information, the PCF sends a response (Npcf_PolicyAuthorization_Create response) to the NEF; the NEF sends a response (Nnef_AfsessionWithQoS_Create response) to the AF.

At step 1306 to 1307: the PCF generates second information based on the third information sent from the AF, and sends the second information to an SMF.

Optionally, the PCF may also generate policy information (e.g., PCC rule) based on the third message. The second information includes the policy information (e.g., PCC rule).

The second information may include at least part of information in the third information.

In particular, the PCF may send a request (Npcf_SMPolicyControl_UpdateNotify request) to the SMF and send the second information to the SMF via the request. Accordingly, the SMF sends a response (Npcf_SMPolicyControl_UpdateNotify response) to the PCF.

At step 1308 to step 1309: the SMF generates first information based on the received second information and sends the first information to the UPF.

The first information is descriptive information of all PDU sets for a flow where the PDU set is located.

For example, the first information includes at least one of: the PDU set size, the PDU set ID, the number of PDUs of the PDU set, the maximum PDU set loss rate/number, the PDU set delay budget, the PDU set content ratio, an N3 jitter, an N9 jitter, or the jitter/jitter range. Optionally, the first information further includes the processing rule for the PDU set. For example, the processing rule for the PDU set may include a QoS profile at a granularity of the PDU set. The SMF sends the first information of each PDU set to the UPF.

In particular, the SMF may send a request (N4 Session Modification request) to the UPF and send the first information to the UPF via the request. Accordingly, the UPF sends a response (N4 Session Modification response) to the SMF.

At step 1310 to step 1311: the SMF sends the first information to the RAN via the AMF.

For example, the SMF sends Namf_Communication_N1N2MessageTransfer to the AMF carrying the first message. The AMF sends the first information to the RAN via the N2 message.

It should be noted that the order of execution of step 1308 to step 1311 is not limited to the order described above, and it is also possible to execute step 1310 to step 1311 first, and then execute step 1308 to step 1309, or execute steps at the same time, which is not limited in the present embodiment.

At step 1312: After receiving the first information, the RAN determines the first value and/or the second value corresponding to the PDU set based on the first information. This step is optional.

At step 1313: The RAN performs a processing on the PDU set.

The UPF may also be performed similarly to the processing of step 1312 and step 1313, which will not be described herein.

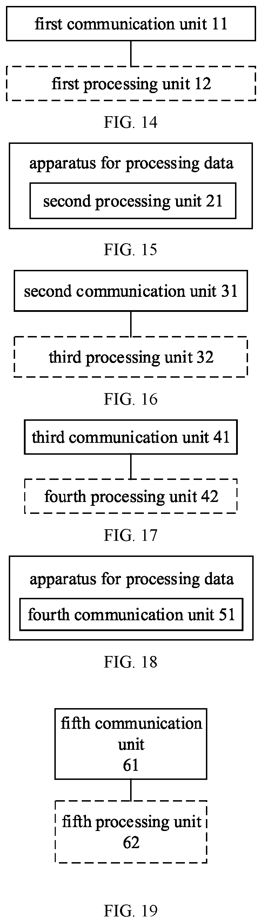

Based on the above embodiments, embodiments of the disclosure also provide an apparatus for processing data. The apparatus is applied to a first function. FIG. 14 is a first block diagram illustrating a structure of an apparatus for processing data according to an embodiment of the disclosure. As shown in FIG. 14, the apparatus includes: a first communication unit 11, configured to receive a PDU of a first PDU set within a first PDU set delay budget.

In some optional embodiments of the disclosure, the PDU includes a data burst and/or a data packet.

In some optional embodiments of the disclosure, the apparatus further includes a first processing unit 12, configured to determine that the first PDU set is successfully transmitted based on all received PDUs of the first PDU set within the first PDU set delay budget and/or a received PDU carrying an end marker.

In some optional embodiments of the disclosure, the apparatus further includes the first processing unit 12, configured to determine that the first PDU set is not successfully transmitted based on at least one of the received PDUs of the first PDU set within the first PDU set delay budget, a first value, a second value, or a received PDU carrying an end marker.

In some optional embodiments of the disclosure, the first processing unit 12 is configured to, in the case that a number of lost PDUs of the first PDU set within the first PDU set delay budget is greater than the first value and/or the PDU carrying the end marker is not received, determine that the first PDU set is not successfully transmitted; and/or in the case that a number of received PDUs of the first PDU set within the first PDU set delay budget is less than the second value and/or the PDU carrying the end marker is not received, determine that the first PDU set is not successfully transmitted.

In some optional embodiments of the disclosure, the first processing unit 12 is further configured to, after determining that the first PDU set is not successfully transmitted, perform one or more of the following:
discard the first PDU set;
discard other PDU sets having a dependency on the first PDU set; or
calculate a PSER based on the first PDU set.

In some optional embodiments of the disclosure, the first value is a maximum PDU set loss rate/number and/or the second value is a PDU set content ratio.

In some optional embodiments of the disclosure, the first function is an RAN and/or a UPF.

In an embodiment of the disclosure, the first processing unit 12 in the apparatus may be implemented in practice by a central processing unit (CPU), a digital signal processor (DSP), a microcontroller unit (MCU) or a field-programmable gate array (FPGA). The first communication unit 11 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to a second function. FIG. 15 is a second block diagram illustrating a structure of an apparatus for processing data according to an embodiment of the disclosure. As shown in FIG. 15, the apparatus includes: a second processing unit 21, configured to add an end marker to a last one or more PDUs of a PDU set.

In some optional embodiments of the disclosure, the second function is one of: a UPF, an SMF, an RAN, an NEF, an AF, an AMF, an NWDAF, a UDM, or an NRF.

In an embodiment of the disclosure, the second processing unit 21 in the apparatus may be implemented in practice by a CPU, a DSP, a MCU or a FPGA.

Embodiments of the disclosure also provide an apparatus for processing data. The apparatus is applied to a first function. FIG. 16 is a third block diagram illustrating a structure of an apparatus for processing data according to an embodiment of the disclosure. As shown in FIG. 16, the apparatus includes: a second communication unit 31, configured to receive first information from an SMF.

In some optional embodiments of the disclosure, the first information is descriptive information of all PDU sets for a flow where the PDU set is located.

In some optional embodiments of the disclosure, the first information includes at least one of: a PDU set size, a PDU set ID, a number of PDUs of the PDU set, a maximum PDU set loss rate/number, a PDU set delay budget, a PDU set content ratio, an N3 jitter, an N9 jitter, or a jitter/jitter range.

In some optional embodiments of the disclosure, for PDU sets with different PDU set IDs, at least one of the PDU set size, the number of PDUs, the maximum PDU set loss rate/number, the PDU set delay budget, the PDU set content ratio, the N3 jitter, the N9 jitter, or the jitter/jitter range of the PDU set corresponding to the first information is different.

In some optional embodiments of the disclosure, the apparatus further includes a third processing unit 32.

The second communication unit 31 is configured to receive a delay budget of one or more PDU sets.

The third processing unit 32 is configured to, in the case that the first function receives delay budgets of a plurality of PDU sets, select a different PDU set delay budget based on the PDU set ID and/or PDU packet information of the PDU set.

In some optional embodiments of the disclosure, the apparatus further includes the third processing unit 32, configured to, in the case that the first function receives the PDU set ID, perform a unified processing for all PDUs carrying the PDU set ID as a whole.

In some optional embodiments of the disclosure, all PDUs carrying the same PDU set ID have a uniform priority.

In some optional embodiments of the disclosure, the first function is an RAN and/or a UPF.

In an embodiment of the disclosure, the third processing unit 32 in the apparatus may be implemented in practice by a CPU, a DSP, a MCU or an FPGA. The second communication unit 31 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to an SMF. FIG. 17 is a fourth block diagram illustrating a structure of an apparatus for processing data according to an embodiment of the disclosure. As shown in FIG. 17, the apparatus includes: a third communication unit 41, configured to receive second information from a PCF, in which the second information is generated based on third information related to a PDU set; and the third information is from an AF.

In some optional embodiments of the disclosure, the apparatus further includes a fourth processing unit 42, configured to generate first information based on the second information,

The third communication unit 41 is further configured to send the first information to a first function.

In some optional embodiments of the disclosure, the third information includes at least one of:
a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

In some optional embodiments of the disclosure, the second information further includes policy information.

In some optional embodiments of the disclosure, the first function is the RAN and/or a UPF.

In an embodiment of the disclosure, the fourth processing unit 42 in the apparatus may be implemented in practice by a CPU, a DSP, a MCU or a FPGA. The third communication unit 41 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to an AF. FIG. 18 is a fifth block diagram illustrating a structure of an apparatus for processing data according to an embodiment of the disclosure. As shown in FIG. 18, the apparatus includes: a fourth communication unit 51, configured to send third information to a PCF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement.

The fourth communication unit 51 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to a PCF. FIG. 19 is a sixth block diagram illustrating a structure of an apparatus for processing data according to an embodiment of the disclosure. As shown in FIG. 19, the apparatus includes: a fifth communication unit 61, configured to receive third information from an AF, in which the third information includes at least one of: a PDU set ID, a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by an RAN, a PDU set processing instruction, a PDU set QoS parameter, a burst periodicity, PDU set header information, PDU set dependency information, a PDU set importance, or a PDU set QoS requirement; and send second information to an SMF.

In some optional embodiments of the disclosure, the apparatus further includes: a fifth processing unit 62, configured to generate the second information based on the third information; and/or the second information further includes policy information.

In an embodiment of the disclosure, the fifth processing unit 62 in the apparatus may be implemented in practice by a CPU, a DSP, a MCU or a FPGA. The fifth communication unit 61 in the apparatus may be implemented in practice by a communication module (including: a basic communication suite, an operating system, a communication module, a standardized interface and protocol, etc.) and a transceiver antenna.

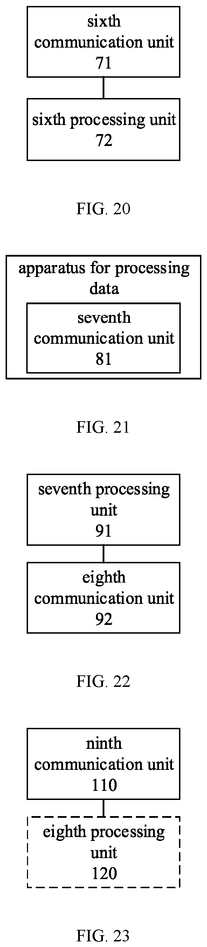

Embodiments of the disclosure also provide an apparatus for processing data. The apparatus is applied to an AF. FIG. 20 is a seventh block diagram illustrating a structure of an apparatus for processing data according to an embodiment of the disclosure. As shown in FIG. 20, the apparatus includes: a sixth communication unit 71 and a sixth processing unit 72.

The sixth communication unit 71 is configured to receive a link MTU value/number/size from an NF.

The sixth processing unit 72 is configured to perform a first processing based on the link MTU value/number/size.

In some optional embodiments of the disclosure, the first processing includes fragmentation of a data packet, and a size of a fragmented data packet does not exceed the link MTU value/number/size.

In some optional embodiments of the disclosure, the NF includes one of: an NEF, a UPF, an NWDAF, a PCF, a UDM, a UDR, an SMF, or an AMF.

In an embodiment of the disclosure, the sixth processing unit 72 in the apparatus may be implemented in practice by a CPU, a DSP, a MCU or a FPGA. The sixth communication unit 71 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to an AF. FIG. 21 is an eighth block diagram illustrating a structure of an apparatus for processing data of according to embodiment of the disclosure. As shown in FIG. 21, the apparatus includes: a seventh communication unit 81, configured to provide fourth information of a PDU set group for an NF, in which the fourth information includes: an indication of PDUs belonging to a PDU set, and/or, an indication of PDUs belonging to a PDU set group.

In some optional embodiments of the disclosure, the PDU set is a video slice and/or a frame.

In some optional embodiments of the disclosure, in the case that the PDU set is the video slice, the PDU set group is the frame.

In some optional embodiments of the disclosure, in the case that the PDU set is the frame, the PDU set group is a GOP.

In some optional embodiments of the disclosure, the NF includes one of: an NEF, a UPF, an NWDAF, a PCF, a UDM, a UDR, an SMF, or an AMF.

In an embodiment of the disclosure, the seventh communication unit 81 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to an NF. FIG. 22 is a ninth block diagram illustrating a structure of an apparatus for processing data according to an embodiment of the disclosure. As shown in FIG. 22, the apparatus includes: a seventh processing unit 91 and an eighth communication unit 92.

The seventh processing unit 91 is configured to add a PDU set group ID to a PDU set.

The eighth communication unit 92 is configured to send the PDU set group ID to an RAN.

In some optional embodiments of the disclosure, the NF includes one of: an NEF, a UPF, an NWDAF, a PCF, a UDM, a UDR, an SMF, an AMF, or an AF.

In an embodiment of the disclosure, the seventh processing unit 91 in the apparatus may be implemented in practice by a CPU, a DSP, a MCU or a FPGA. The eighth communication unit 92 in the apparatus may be implemented in practice by a communication module (including: a basic communication suite, an operating system, a communication module, a standardized interface and protocol, etc.) and a transceiver antenna.

Embodiments of the disclosure also provide an apparatus for processing data. The apparatus is applied to an RAN. FIG. 23 is a tenth block diagram illustrating a structure of an apparatus for processing data nine an embodiment of the disclosure. As shown in FIG. 23, the apparatus includes: a ninth communication unit 110, configured to receive a PDU set group ID from an NF.

In some optional embodiments of the disclosure, the NF includes one of: an NEF, a UPF, an NWDAF, a PCF, a UDM, a UDR, an SMF, an AMF, or an AF.

In some optional embodiments of the disclosure, the apparatus further includes an eighth processing unit 120, configured to, in the case that a most important PDU set in a PDU set group received by the ninth communication unit 110 is lost or discarded, discard other PDU sets in the PDU set group.

In an embodiment of the disclosure, the eighth processing unit 120 in the apparatus may be implemented in practice by a CPU, a DSP, a MCU or a FPGA. The ninth communication unit 110 in the apparatus may be implemented in practice by a communication module (including: a basic communication suite, an operating system, a communication module, a standardized interface and protocol, etc.) and a transceiver antenna.

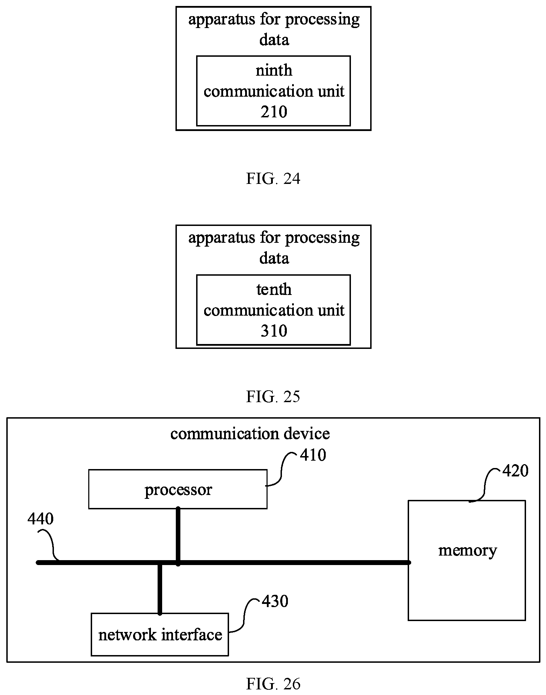

Embodiments of the disclosure also provide an apparatus for processing data. The apparatus is applied to a UE. FIG. 24 is an eleventh block diagram illustrating a structure of an apparatus for processing data according to an embodiment of the disclosure. As shown in FIG. 24, the apparatus includes: a ninth processing unit 210, configured to select to access a first function with a first characteristic based on fifth information and/or a DNN.

In some optional embodiments of the disclosure, the fifth information includes NSSAI and/or S-NSSAI.

In some optional embodiments of the disclosure, the first characteristic is that the first function performs a PDU set integrated packet handling.

In some optional embodiments of the disclosure, a correspondence between the fifth information and/or the DNN and the first characteristic is in user subscription information of the UE.

In some optional embodiments of the disclosure, the first function is an RAN and/or a UPF.

In an embodiment of the disclosure, the ninth processing unit 210 in the apparatus may be implemented in practice by a CPU, a DSP, a MCU or a FPGA.

Embodiments of the disclosure also provide an apparatus for processing data. The apparatus is applied to a first function. FIG. 25 is a twelfth block diagram illustrating a structure of an apparatus for processing data according to an embodiment of the disclosure. As shown in FIG. 25, the apparatus includes: a tenth communication unit 310, configured to receive an N3 transmission jitter and/or an N9 transmission jitter from a second function, and/or receive an N6 transmission jitter from an AF.

In some optional embodiments of the disclosure, the first function is an RAN and/or a UPF.

In some optional embodiments of the disclosure, the second function is one of: a PCF, an SMF, an AMF, a UPF, or a NWDAF.

The tenth communication unit 310 in the apparatus may be implemented in practice by a communication module (including: a basic communication suite, an operating system, a communication module, a standardized interface and protocol, etc.) and a transceiver antenna.

It should be noted that the apparatus for processing data provided in the above embodiments is only exemplified by a division of each of the above-described program modules when processing data. In practical application, the above processing may be assigned to be completed by different program modules as needed, i.e., an internal structure of the apparatus may be divided into different program modules to complete all or part of the above processing. In addition, the apparatus for processing data provided in the above embodiments belongs to a same concept as the embodiments of the method for processing data, and the specific realization process is described in detail in the embodiments of the method, and will not be repeated herein.

Based on the above embodiments, embodiments of the disclosure further provide a communication device. The communication device may specifically be a first function, a second function, an SMF, an AF, a PCF, a UE, an RAN, or an NF, and the like. FIG. 26 is a block diagram illustrating a hardware structure of a communication device according to an embodiment of the disclosure. As shown in FIG. 26, the communication device includes a processor 410 and a memory 420 storing a computer program executable by the processor 420. The processor 410 implements steps of the method for processing data of the embodiments of the disclosure applied to the first function, the second function, the SMF, the AF, the PCF, the UE, the RAN, or the NF when executing the program.

Optionally, the communication device further includes at least one network interface 430. The components in the communication device are coupled together via a bus system 440. It should be understood that the bus system 440 is configured to realize connection and communication between the components. The bus system 440 includes a power bus, a control bus, and a status signal bus in addition to a data bus. However, for clarity of illustration, the various buses are labeled as the bus system 440 in FIG. 26.

It may be understood that, the memory 420 of embodiment of the disclosure may be a volatile or nonvolatile memory, and may also include both the volatile and nonvolatile memories. The nonvolatile memory may be a read only memory (ROM), a programmable read only memory (PROM), an erasable programmable read only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The magnetic surface memory may be a magnetic disk memory or a magnetic tape memory. The volatile memory may be a random access memory (RAM), which is used as an external cache. By way of illustration, but not limitation, a plurality of forms of RAMs are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM), and a direct rambus random access memory (DRRAM). The memory 420 described in embodiments of the disclosure are intended to include, but not limited to, these and any other suitable types of memories.

The method disclosed in embodiments of the disclosure may be applied to the processor 410 or implemented by the processor 410. The processor 410 may be an integrated circuit chip with a signal processing capability. In an implementation process, each step of the above method may be completed by an integrated logic circuit of hardware or instructions in the form of software in the processor 410. The processor 410 above may be a general processor, a digital signal processor (DSP), or other programmable logic devices, discrete gates or transistor logic devices, discrete hardware components, and the like. The processor 410 may implement or execute the methods, steps and logic blocks disclosed in embodiments of the disclosure. The general processor may be a microprocessor or any conventional processor, and the like. The steps of the method disclosed in embodiments of the disclosure may be executed and completed by a hardware decoding processor which is embodied directly or by a combination of hardware and software modules in the decoding processor. The software module may be located in a storage medium. The storage medium is located in the memory 420. The processor 410 reads the information in the memory 420, and completes the steps of the above method in combination with the hardware.

In an exemplary embodiment, the communication device may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic components, for executing the above methods.

In an exemplary embodiment, embodiments of the disclosure further provide a computer-readable storage medium. For example, the storage medium includes the memory 72 storing the computer program. The above computer program may be executed by the processor 71 of the communication device to complete the steps of the above methods. The computer-readable storage medium may be a memory such as the FRAM, the ROM, the PROM, the EPROM, the EEPROM, the flash memory, the magnetic surface memory, the optical disk, the CD-ROM or the like; or may be a variety of devices including one of the above memories or any combination thereof.

Embodiments of the disclosure further provide a computer-readable storage medium. The computer-readable storage medium has stored a computer program that, when executed by a processor, steps of the method for processing data of the embodiments of the disclosure applied to the first function, the second function, the SMF, the AF, the PCF, the UE, the RAN, or the NF are implemented.

The methods disclosed in the method embodiments according to the disclosure may be arbitrarily combined without conflicts to obtain new method embodiments.

Features disclosed in the product embodiments according to the disclosure may be arbitrarily combined without conflicts to obtain new product embodiments.

Features disclosed in the method embodiments or the apparatus embodiments according to the disclosure may be arbitrarily combined without conflicts to obtain new method embodiments or apparatus embodiments.

In several embodiments provided in the disclosure, it should be understood that the disclosed apparatus and method may be implemented in other ways. For example, the above apparatus embodiments are merely illustrative, such as division of units, only a logical function division. There may be additional division modes when actual implementation, such as a plurality of units or components may be combined or may be integrated into another system, or some features may be omitted, or not performed. The coupling, direct coupling, or communicatively connection of each other shown or discussed may be an indirect coupling or communicatively connection via some interfaces, devices, or units, which may be in electrical, mechanical, or other forms.

The above units described as separate parts may or may not be physically separated, the parts shown as units may or may not be physical units, which may be located in one place, or may be distributed to a plurality of network units. Part or all units may be selected according to the actual requirements to achieve the purpose of the disclosure.

In addition, functional units in embodiments of the disclosure may be integrated in a processing unit, or may be physically existed separately, or two or more units may be integrated in one unit. The integrated units may be implemented either in the form of hardware or in the form of hardware plus software function units.

Those skilled in the art may understand that, all or part of the steps of the above-mentioned method embodiments may be completed by hardware related to program instructions, and the above-mentioned programs may be stored in a computer-readable storage medium. When the programs are executed, the steps of the above-mentioned method embodiments are implemented. The above-mentioned storage medium includes various media that may store program codes, such as a mobile storage device, a ROM, a RAM, a magnetic disk or an optical disk.

Or, if the integrated units of the disclosure are implemented in the form of a software function module, sold and used as an independent product, they may also be stored in a computer readable storage medium. On the basis of such an understanding, the essential technical solution of the disclosure, or a part of the technical solution contributing to the related art may be embodied in the form of a software product. The computer software product is stored in a storage medium, including several instructions to enable a computer device (may be a personal computer, a server, a network device, and the like) to perform all or part of the steps in various embodiments of the disclosure. The forgoing storage medium includes a mobile storage device, a ROM, a RAM, a magnetic disk, or an optical disk, and other media that may store program codes.

The above is merely a specific embodiment of the disclosure, but the scope of protection of the disclosure is not limited thereto, and those skilled in the art may easily envisage changing or replacing within the technical scope disclosed in the disclosure, which should be covered within the protection scope of the disclosure. Therefore, the protection scope of the disclosure shall be subject to the protection scope of the claims.

## Claims

1. A method for processing data, comprising:
receiving, by a first function, a protocol data unit (PDU) of a first PDU set within a first PDU set delay budget.

2. The method according to claim 1, wherein the a PDU comprises a data burst and/or a data packet.

3. The method according to claim 1, further comprising:
determining, by the first function, that the first PDU set is successfully transmitted based on all received PDUs of the first PDU set within the first PDU set delay budget and/or a received PDU carrying an end marker.

4. The method according to claim 1, further comprising:
determining, by the first function, that the first PDU set is not successfully transmitted based on at least one of received PDUs of the first PDU set within the first PDU set delay budget, a first value, a second value, or a received PDU carrying an end marker.

5. The method according to claim 4, wherein determining, by the first function, that the first PDU set is not successfully transmitted based on at least one of the received PDUs of the first PDU set within the first PDU set delay budget, the first value, the second value, or the received PDU carrying the end marker comprises one of the following cases:
in the case that a number of lost PDUs of the first PDU set within the first PDU set delay budget is greater than the first value and/or a PDU carrying the end marker is not received, determining, by the first function, that the first PDU set is not successfully transmitted; or
in the case that a number of the received PDUs of the first PDU set within the first PDU set delay budget is less than the second value and/or the PDU carrying the end marker is not received, determining, by the first function, that the first PDU set is not successfully transmitted.

6. The method according to claim 4 or claim 5, further comprising:
after determining, by the first function, that the first PDU set is not successfully transmitted, performing one or more of the following:
discarding, by the first function, the first PDU set;
discarding, by the first function, other PDU sets having a dependency on the first PDU set; or
calculating, by the first function, a PDU set error rate (PSER) based on the first PDU set.

7. The method according to claim 4 or claim 5, wherein the first value is a maximum PDU set loss rate/number and/or the second value is a PDU set content ratio.

8. The method according to claim 1, wherein the first function is a radio access network (RAN) and/or a user plane function (UPF).

9. A method for processing data, comprising:
adding, by a second function, an end marker in a last one or more protocol data units (PDUs) of a PDU set.

10. The method according to claim 9, wherein the second function is one of: a user plane function (UPF), a session management function (SMF), a radio access network (RAN), a network exposure function (NEF), an application function (AF), an access and mobility management function (AMF), a network data analytics function (NWDAF), a unified data management (UDM), or a network repository function (NRF).

11. A method for processing data, comprising:
receiving, by a first function, first information from a session management function (SMF).

12. The method according to claim 11, wherein the first information is descriptive information of all protocol data unit (PDU) sets for a flow where the PDU set is located.

13. The method according to claim 11 or 12, wherein the first information comprises at least one of: a protocol data unit (PDU) set size, a PDU set identifier (ID), a number of PDUs of a PDU set, a maximum PDU set loss rate/number, a PDU set delay budget, a PDU set content ratio, an N3 jitter, an N9 jitter, or a jitter/jitter range.

14. The method according to claim 13, wherein for PDU sets with different PDU set IDs, at least one of the PDU set size, the number of PDUs, the maximum PDU set loss rate/number, the PDU set delay budget, the PDU set content ratio, the N3 jitter, the N9 jitter, or the jitter/jitter range of a PDU set corresponding to the first information is different.

15. The method according to claim 13, further comprising:
receiving, by the first function, a delay budget of one or more PDU sets; and
in the case that the first function receives delay budgets of a plurality of PDU sets, selecting, by the first function, a different PDU set delay budget based on the PDU set ID and/or PDU packet information of the PDU set.

16. The method according to claim 13, further comprising:
in the case that the first function receives the PDU set ID, performing an integrated handling for all PDUs carrying the PDU set ID as a whole.

17. The method according to claim 16, wherein all PDUs carrying a same PDU set ID have a uniform priority.

18. The method according to claim 11, wherein the first function is a radio access network (RAN) and/or a user plane function (UPF).

19. A method for processing data, comprising:
receiving, by a session management function (SMF), second information from a policy control function (PCF), wherein the second information is generated based on third information related to a protocol data unit (PDU) set; and the third information is from an application function (AF).

20. The method according to claim 19, further comprising:
generating, by the SMF, first information based on the second information, and sending the first information to a first function.

21. The method according to claim 19, wherein the third information comprises at least one of: a PDU set identifier (ID), a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by a radio access network (RAN), a PDU set processing instruction, a PDU set quality of service (QoS) parameter, a burst periodicity, PDU set header information, PDU set dependency information, a PDU set importance, or a PDU set QoS requirement.

22. The method according to claim 19, wherein the second information further comprises policy information.

23. The method according to claim 20, wherein the first function is a radio access network (RAN) and/or a user plane function (UPF).

24. A method for processing data, comprising:
sending, by an application function (AF), third information to a policy control function (PCF), wherein the third information comprises at least one of: a protocol data unit (PDU) set identifier (ID), a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by a radio access network (RAN), a PDU set processing instruction, a PDU set quality of service (QoS) parameter, a burst periodicity, PDU set header information, PDU set dependency information, a PDU set importance, or a PDU set QoS requirement.

25. A method for processing data, comprising:
receiving, by a policy control function (PCF), third information from an application function (AF), wherein the third information comprises at least one of: a protocol data unit (PDU) set identifier (ID), a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by a radio access network (RAN), a PDU set processing instruction, a PDU set quality of service (QoS) parameter, a burst periodicity, PDU set header information, PDU set dependency information, a PDU set importance, or a PDU set QoS requirement; and
sending, by the PCF, second information to a session management function (SMF).

26. The method according to claim 25, further comprising:
generating, by the PCF, the second information based on the third information; and/or,
the second information further comprising policy information.

27. A method for processing data, comprising:
receiving, by an application function (AF), a link maximum transmission unit (MTU) value/number/size from a network function (NF); and
performing, by the AF, a first processing based on the link MTU value/number/size.

28. The method according to claim 27, wherein the first processing comprises fragmentation of a data packet, and a size of a fragmented data packet does not exceed the link MTU value/number/size.

29. The method according to claim 27, wherein the NF comprises one of: a network exposure function (NEF), a user plane function (UPF), a network data analytics function (NWDAF), a policy control function (PCF), a unified data management (UDM), a unified data repository (UDR), a session management function (SMF), or an access and mobility management function (AMF).

30. A method for processing data, comprising:
providing, by an application function (AF), fourth information of a protocol data unit (PDU) set group to a network function (NF), wherein the fourth information comprises: an indication of PDUs belonging to a PDU set, and/or, an indication of PDUs belonging to a PDU set group.

31. The method according to claim 30, wherein the PDU set is a video slice and/or a frame.

32. The method according to claim 30, wherein in the case that the PDU set is the video slice, the PDU set group is the frame.

33. The method according to claim 30, wherein in the case that the PDU set is the frame, the PDU set group is a group of pictures (GOP).

34. The method according to claim 30, wherein the NF comprises one of: a network exposure function (NEF), a user plane function (UPF), a network data analytics function (NWDAF), a policy control function (PCF), a unified data management (UDM), a unified data repository (UDR), a session management function (SMF), or an access and mobility management function (AMF).

35. A method for processing data, comprising:
adding, by a network function (NF), a protocol data unit (PDU) set group identifier (ID) to a PDU set and sending the PDU set group ID to a radio access network (RAN).

36. The method according to claim 35, wherein the NF comprises one of: a network exposure function (NEF), a user plane function (UPF), a network data analytics function (NWDAF), a policy control function (PCF), a unified data management (UDM), a unified data repository (UDR), a session management function (SMF), an access and mobility management function (AMF), or an application function (AF).

37. A method for processing data, comprising:
receiving, by a radio access network (RAN), a protocol data unit (PDU) set group identifier (ID) from a network function (NF).

38. The method according to claim 37, wherein the NF comprises one of: a network exposure function (NEF), a user plane function (UPF), a network data analytics function (NWDAF), a policy control function (PCF), a unified data management (UDM), a unified data repository (UDR), a session management function (SMF), an access and mobility management function (AMF), or an application function (AF).

39. The method according to claim 37, comprising:
in the case that a most important PDU set in a PDU set group received by the RAN is lost or discarded, discarding, by the RAN, other PDU sets in the PDU set group.

40. A method for processing data, comprising:
selecting, by a user equipment (UE), to access a first function with a first characteristic based on fifth information and/or a data network name (DNN).

41. The method according to claim 40, wherein the fifth information comprises network slice selection assistance information (NSSAI) and/or single network slice selection assistance information (S-NSSAI).

42. The method according to claim 40, wherein the first characteristic is that the first function performs a PDU set integrated packet handling.

43. The method according to claim 40, wherein a correspondence between the fifth information and/or the DNN and the first characteristic is in user subscription information of the UE.

44. The method according to claim 40, wherein the first function is a radio access network (RAN) and/or a user plane function (UPF).

45. A method for processing data, comprising:
receiving, by a first function, an N3 transmission jitter and/or an N9 transmission jitter from a second function, and/or receiving an N6 transmission jitter from an application function (AF).

46. The method according to claim 45, wherein the first function is a radio access network (RAN) and/or a user plane function (UPF).

47. The method according to claim 45, wherein the second function is one of: a policy control function (PCF), a session management function (SMF), an access and mobility management function (AMF), a UPF, or a network data analytics function (NWDAF).

48. An apparatus for processing data, applied to a first function, comprising: a first communication unit, configured to receive a protocol data unit (PDU) of a first PDU set within a first PDU set delay budget.

49. An apparatus for processing data, applied to a second function; comprising: a second processing unit, configured to add an end marker to a last one or more protocol data units (PDUs) of a PDU set.

50. An apparatus for processing data, applied to a first function; comprising: a second communication unit, configured to receive first information from a session management function (SMF).

51. An apparatus for processing data, applied to a session management function (SMF); comprising: a third communication unit, configured to receive second information from a policy control function (PCF), wherein the second information is generated based on third information related to a protocol data unit (PDU) set; and the third information is from an application function (AF).

52. An apparatus for processing data, applied to an application function (AF); comprising: a fourth communication unit, configured to send third information to a policy control function (PCF), wherein the third information comprises at least one of: a protocol data unit (PDU) set identifier (ID), a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by a radio access network (RAN), a PDU set processing instruction, a PDU set quality of service (QoS) parameter, a burst periodicity, PDU set header information, PDU set dependency information, a PDU set importance, or a PDU set QoS requirement.

53. An apparatus for processing data, applied to a policy control function (PCF); comprising:
a fifth communication unit, configured to receive third information from an application function (AF), wherein the third information comprises at least one of: protocol data unit (PDU) set identifier (ID), a PDU set size, a number of PDUs of the PDU set, a maximum PDU set loss rate/number, a maximum PDU set packet loss rate, a PDU set delay budget, a PDU set content ratio, a jitter/jitter range, an N6 transmission jitter, a processing rule for the PDU set by a radio access network (RAN), a PDU set processing instruction, a PDU set quality of service (QoS) parameter, a burst periodicity, PDU set header information, PDU set dependency information, a PDU set importance, or a PDU set QoS requirement; and send second information to a session management function (SMF).

54. An apparatus for processing data, applied to an application function (AF); comprising: a sixth communication unit and a sixth processing unit, wherein
the sixth communication unit is configured to receive a link maximum transmission unit (MTU) value/number/size from a network function (NF); and
the sixth processing unit is configured to perform a first processing based on the link MTU value/number/size.

55. An apparatus for processing data, applied to an application function (AF), comprising: a seventh communication unit, configured to provide fourth information of a protocol data unit (PDU) set group to a network function (NF), wherein the fourth information comprises: an indication of PDUs belonging to a PDU set, and/or, an indication of PDUs belonging to a PDU set group.

56. An apparatus for processing data, applied to a network function (NF); comprising: a seventh processing unit and an eighth communication unit, wherein
the seventh processing unit is configured to add a protocol data unit (PDU) set group identifier (ID) to a PDU set; and
the eighth communication unit is configured to send the PDU set group ID to a radio access network (RAN).

57. An apparatus for processing data, applied to a radio access network (RAN), comprising: a ninth communication unit, configured to receive a protocol data unit (PDU) set group identifier (ID) from a network function (NF).

58. An apparatus for processing data, applied to a user equipment (UE); comprising: a ninth processing unit, configured to select to access a first function with a first characteristic based on fifth information and/or a data network name (DNN).

59. An apparatus for processing data, applied to a first function, comprising: a tenth communication unit, configured to receive an N3 transmission jitter and/or an N9 transmission jitter from a second function, and/or receive an N6 transmission jitter from an application function (AF).

60. A computer-readable storage medium having stored a computer program that, when executed by a processor,
steps of the method according to any one of claims 1 to 8 are implemented, or
steps of the method according to any one of claims 9 to 10 are implemented, or
steps of the method according to any one of claims 11 to 18 are implemented, or
steps of the method according to any one of claims 19 to 23 are implemented, or
steps of the method according to claim 24 are implemented, or
steps of the method according to any one of claims 25 to 26 are implemented, or
steps of the method according to any one of claims 27 to 29 are implemented, or
steps of the method according to any one of claims 30 to 34 are implemented, or
steps of the method according to any one of claims 35 to 36 are implemented, or
steps of the method according to any one of claims 37 to 39 are implemented, or
steps of the method according to any one of claims 40 to 44 are implemented, or
steps of the method according to any one of claims 45 to 47 are implemented.

61. A communication device comprising a processor and a memory storing a computer program executable by the processor, wherein when the computer program is executed by the processor,
steps of the method according to any one of claims 1 to 8 are implemented, or
steps of the method according to any one of claims 9 to 10 are implemented, or
steps of the method according to any one of claims 11 to 18 are implemented, or
steps of the method according to any one of claims 19 to 23 are implemented, or
steps of the method according to claim 24 are implemented, or
steps of the method according to any one of claims 25 to 26 are implemented, or
steps of the method according to any one of claims 27 to 29 are implemented, or
steps of the method according to any one of claims 30 to 34 are implemented, or
steps of the method according to any one of claims 35 to 36 are implemented, or
steps of the method according to any one of claims 37 to 39 are implemented, or
steps of the method according to any one of claims 40 to 44 are implemented, or
steps of the method according to any one of claims 45 to 47 are implemented.
